(19) Europäisches Patentamt

European Patent Office

Office européen des brevets

(11) **EP 0 826 139 B1**

(12) **FASCICULE DE BREVET EUROPEEN**

(45) Date de publication et mention
de la délivrance du brevet:
**14.11.2001 Bulletin 2001/46**

(51) Int Cl.⁷: **G01F 1/66**

(21) Numéro de dépôt: **96916212.2**

(22) Date de dépôt: **17.05.1996**

(86) Numéro de dépôt international:
**PCT/FR96/00743**

(87) Numéro de publication internationale:
**WO 96/36852 (21.11.1996 Gazette 1996/51)**

(54) **DISPOSITIF POUR LA MESURE DE LA VITESSE D'ECOULEMENT D'UN FLUIDE PAR ULTRASONS**

VORRICHTUNG ZUR STRÖMUNGSGESCHWINDIGKEITSMESSUNG EINER FLÜSSIGKEIT MITTELS ULTRASCHALL

ULTRASONIC DEVICE FOR MEASURING A FLUID FLOW RATE

(84) Etats contractants désignés:
**DE ES FR GB IT NL**

(30) Priorité: **17.05.1995 FR 9505950**

(43) Date de publication de la demande:
**04.03.1998 Bulletin 1998/10**

(73) Titulaire: **SCHLUMBERGER INDUSTRIES S.A.
92120 Montrouge (FR)**

(72) Inventeurs:
  • **LIGNEUL, Patrice**
    **F-92370 Chaville (FR)**
  • **HOCQUET, Philippe**
    **F-92170 Vanves (FR)**

(56) Documents cités:
  **EP-A- 0 580 099          FR-A- 2 683 046**
  **GB-A- 2 101 318          US-A- 4 140 012**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne le domaine de la mesure de la vitesse d'un fluide, mettant par exemple en oeuvre la mesure du temps de vol d'un signal acoustique entre deux transducteurs émetteurs-récepteurs disposés aux extrémités d'un conduit dans lequel s'écoule le fluide.

L'invention trouve notamment application dans les compteurs de liquide ou de gaz, par exemple dans les installations domestiques.

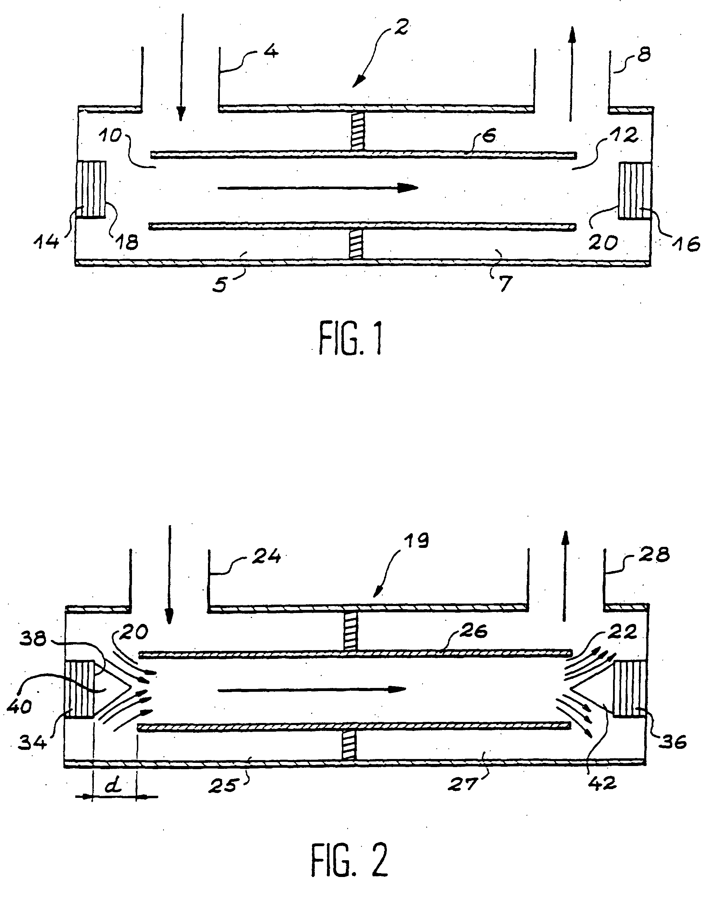

Un dispositif connu, utilisé pour mesurer le débit d'un fluide, est représenté schématiquement sur la figure 1. Ce dispositif y est globalement désigné par la référence 2. Il comporte, plus précisément, une ouverture 4 d'arrivée du fluide, deux chambres 5, 7 dites chambres de répartition, et une ouverture 8 de sortie du fluide. Les deux chambres de répartition sont traversées par un tube 6 de forme cylindrique, présentant une ouverture d'entrée 10 et une ouverture de sortie 12, disposées sur le trajet du fluide à l'intérieur de l'appareil. En face de chaque ouverture 10, 12 est positionné un transducteur 18, 20 pour l'émission et la réception de signaux acoustiques en direction et en provenance du tube 6. Deux procédés connus sont utilisés pour déterminer la vitesse d'écoulement du fluide par mesure de temps de vol : la technique dite "de mesure de phase" et la technique dite "de mesure de temps".

Les documents FR-A-2 458 798 et DE-A-3 100 777 divulguent des appareils fonctionnant sur le principe décrit ci-dessus. Afin d'obtenir une meilleure précision de la mesure ces documents préconisent de choisir une distance E la plus faible possible, entre la surface 18, 20 des transducteurs et l'ouverture correspondante 10, 12 du tube 6 vers laquelle cette surface est tournée. Ces documents indiquent une distance E préférentiellement égale à sensiblement la moitié du diamètre du tube 6.

Ceci ne va pas sans poser des problèmes de perte de charge à l'entrée et à la sortie du dispositif de mesure. Dans les documents cités ci-dessus, ces problèmes de perte de charge ne sont que partiellement compensés par des formes particulières des chambres de répartition, ou des dispositions relatives particulières du tube et des chambres de répartition, ou par des caractéristiques particulières du tube (par exemple des trous aménagés aux deux extrémités du tube). Ces problèmes de perte de charge sont extrêmement critiques, puisqu'un dispositif de mesure tel qu'il vient d'être décrit est généralement installé en amont de la zone d'utilisation du fluide.

Une solution, consistant à éloigner les transducteurs des orifices du tube, pose néanmoins un autre problème. En effet, pour un fluide donné, il est commode d'établir une courbe d'étalonnage qui permet d'obtenir le débit à partir de la mesure effectuée. Or, la solution consistant à éloigner les transducteurs provoque des non-linéarités dans les courbes d'étalonnage. Si les transducteurs sont situés à une distance relativement éloignée des ouvertures du tube, il se produit, pour un régime de débit élevé, des tourbillons au voisinage de la surface 18 du transducteur 14 situé à l'entrée du tube 6, tandis que, pour un régime de débit faible, les vitesses relatives les plus élevées de l'écoulement du fluide vont être concentrées à l'entrée et à la sortie de l'appareil et donc relativement éloignées des surfaces 18, 20 des transducteurs 14, 16. Par conséquent, lors d'une transition d'un régime de débit élevé à un régime de débit faible et inversement, les conditions de mesure vont être variables pour les capteurs, ce qui explique les non-linéarités dans les courbes d'étalonnage et donc une réduction de la précision sur la mesure. Dans certains cas, l'écart par rapport à la linéarité peut atteindre 4 à 5%.

Par conséquent, les appareils de l'art antérieur posent deux problèmes liés aux pertes de charge et à la précision de l'appareil.

La présente invention a pour objet un dispositif qui permet de résoudre au moins un des problèmes précités.

Plus précisément, elle a pour objet un dispositif de mesure de débit d'un fluide selon la revendication 1.

Avec un tel dispositif, il a été constaté en outre, que l'écart type des mesures en régime non permanent est avantageusement réduit : les mesures sont donc moins bruitées ce qui permet de n'en réaliser qu'un nombre limité pour obtenir la valeur moyenne correspondant au débit.

Le matériau transparent aux ondes acoustiques est avantageusement un aggloméré de fibres synthétiques ou métalliques ayant un diamètre de l'ordre du dixième de millimètre.

Selon un mode particulier de réalisation de l'invention, la forme d'au moins un des éléments en un matériau transparent aux ondes acoustiques est telle que, lors du passage d'un fluide, ce demier traverse une section perpendiculaire à son écoulement et qui varie de manière continue dans le sens de cet écoulement.

Par ailleurs, un dispositif selon la présente invention peut être tel que le conduit a une symétrie de révolution autour d'un axe, au moins un des éléments en matériau transparent aux ondes acoustiques ayant également une symétrie de révolution autour de cet axe. Le conduit peut aussi avoir une symétrie cylindrique autour d'un axe, au moins un des éléments en matériau transparent aux ondes acoustiques ayant une. symétrie de révolution autour de cet axe.

Selon un autre aspect, dans un dispositif selon l'invention, chaque transducteur peut être disposé en regard d'une des ouvertures du conduit, à distance de cette ouverture, chaque élément en matériau transparent aux ondes acoustiques étant fixé sur une face d'un transducteur tournée vers l'ouverture correspondante du conduit.

Il est alors possible de régulariser le flux du fluide à l'aide de chaque élément en matériau transparent aux ondes acoustiques, sans pour autant induire de pertes de charge importantes.

Ainsi, la distance entre la face du transducteur tournée vers l'ouverture correspondante du conduit et cette dernière ouverture, peut être choisie telle que la perte de charge entre l'entrée et la sortie du dispositif soit inférieure à une valeur donnée.

Selon encore un autre aspect de l'invention, le conduit peut avoir une forme approximativement ellipsoïdale et une surface intérieure réfléchissant les ondes acoustiques, chaque transducteur étant positionné à un foyer de l'ellipsoïde, et chaque élément transparent aux ondes acoustiques s'appuyant sur un transducteur.

Un tel dispositif peut en outre comporter un obstacle de forme aérodynamique, à symétrie axiale par rapport au grand axe de l'ellipsoïde, disposé dans le conduit, chaque élément transparent aux ondes acoustiques s'appuyant d'un côté sur un transducteur et de l'autre côté sur l'obstacle.

Par ailleurs, au moins un élément en matériau transparent aux ondes acoustiques peut alors avoir un profil extérieur tronconique.

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente schématiquement un dispositif selon l'art antérieur,
- la figure 2 représente un premier mode de réalisation de l'invention,
- la figure 3 représente l'écart par rapport à la linéarité, des mesures obtenues avec un dispositif selon l'art antérieur et un dispositif conforme à l'invention,
- les figures 4A à 4D représentent des répartitions du champ de vitesses axiales dans un appareil selon l'art antérieur et selon l'invention,
- la figure 5 représente une variante du premier mode de réalisation de l'invention,
- la figure 6 représente un second mode de réalisation de l'invention,
- la figure 7 représente en détail un élément pour le second mode de réalisation de l'invention.

Un premier mode de réalisation de l'invention est illustré sur la figure 2. Sur cette figure, l'appareil désigné globalement par la référence 19 comporte une ouverture d'entrée 24 et une ouverture de sortie 28 pour la circulation du fluide, ainsi que deux chambres de répartition 25, 27. Un conduit 26 traverse ces deux chambres et guide le fluide de l'entrée vers la sortie de l'appareil. Deux transducteurs 34, 36 sont disposés en face des orifices d'entrée et de sortie 20, 22 du conduit 26. Par transducteur, on entend un capteur présentant une surface active, par exemple une membrane, susceptible de générer une onde de pression acoustique en réponse à une excitation. Il est par exemple possible d'utiliser plusieurs transducteurs, c'est à dire plusieurs surfaces actives; distribuées en réseau pour augmenter l'amplitude de l'onde générée et/ou pour améliorer la directivité spatiale de cette onde. Sur la face 38 du transducteur d'entrée, tournée vers l'ouverture 20 du conduit 26, et située à une distance $\underline{d}$ de cette ouverture, est monté un élément 40 ayant une symétrie axiale autour de l'axe du cylindre 26. Sur l'exemple de la figure 2, cet élément est de forme conique. Le cône a une base de diamètre sensiblement égal au diamètre du transducteur 34. La hauteur de ce cône est choisie de façon à assurer le guidage du fluide lors de son entrée dans le cylindre 26, c'est-à-dire en fait de façon à assurer une régularisation des lignes de courant du fluide, et ceci quel que soit le régime de l'écoulement du fluide dans une gamme de débits donnée. Par exemple, une hauteur de cône égale à la distance d entre la surface 38 et l'ouverture 20 convient pour assurer ladite fonction de régularisation.

Il faut préciser que, par l'expression "gamme de débits donnée" on entend, y compris pour le reste de l'exposé concernant la présente invention, toute gamme imposée par l'utilisateur et limitée par une borne inférieure $d_i$ et une borne supérieure $d_s$, $d_i$ pouvant être compris entre environ un (ou quelques) l/h et $10^2$ (ou quelques $10^2$) l/h et $d_s$ entre $10^2$ (ou quelques $10^2$) l/h et $10^3$ (ou quelques $10^3$ ou $10^4$) l/h. Par exemple, des gammes de débits courantes sont, pour les gaz dans des applications domestiques, de 5 l/h à $10^4$ l/h, et, pour les liquides d'environ 1 l/h à $2.10^3$ l/h.

Le matériau de l'élément 40 est choisi de façon à ce que sa porosité soit suffisante pour laisser passer les ondes acoustiques (ondes ultrasonores) sans atténuation. Un agglomérat de fibres synthétiques ou métalliques d'un diamètre de l'ordre du dixième de millimètre permet de réaliser cette transparence acoustique. Dans un tel cas, l'écartement entre fibres ne dépasse pas le millimètre, ce qui rend le matériau imperméable à l'écoulement du fluide. En effet, le fluide remplit alors les espaces entre fibres mais l'écoulement passe sur le pourtour du matériau, là où la perte de charge est négligeable.

En fait, la taille des fibres est choisie de préférence en relation avec la fréquence, ou la longueur d'onde, des ondes acoustiques utilisées. Dans un gaz, les fréquences utilisées varient sensiblement entre 25 et 200kHz, ce qui correspond à une longueur d'onde de l'ordre de 10mm. Pour des fibres d'un diamètre de l'ordre du 10ème de millimètre et pour un écartement entre fibres de l'ordre du millimètre, il n'y aura alors pas d'effet de couplage des ondes acoustiques avec le matériau. De même, si le fluide est de l'eau, des fréquences comprises entre 200kHz et 1 MHz sont couramment utilisées. Les longueurs d'onde sont alors de l'ordre de 2 à 4 mm, et les dimensions données ci-dessus conviennent encore puisque, là aussi, tout couplage des ondes acoustiques avec le matériau est évité. Par conséquent, un matériau constitué d'un agglomérat de fibres synthétiques ou métalliques d'un diamètre de l'ordre du 10ème de millimètre offre l'avantage d'être utilisable avec des fluides différents.

A titre d'exemple un matériau transparent aux ondes acoustiques et convenant à l'utilisation décrite ci-dessus peut être le produit commercialisé sous la marque SCOTCH-BRITE et portant la référence FY06E3 72143 - Réf. GRV3 ou encore le produit commercialisé sous la marque NYLAP par la Société Nicols France, Bertry 59980, France et portant la référence B 18250 - F 82500.

L'élément 40 qui a été décrit ci-dessus est associé au transducteur situé en face de l'ouverture d'entrée du cylindre 26. Un même élément 42 (même matériau et même forme que l'élément 40) est associé au transducteur de sortie 36. Il est également possible de choisir deux éléments de forme différente, ou un seul élément, associé soit au transducteur de sortie 36, soit au transducteur d'entrée 34.

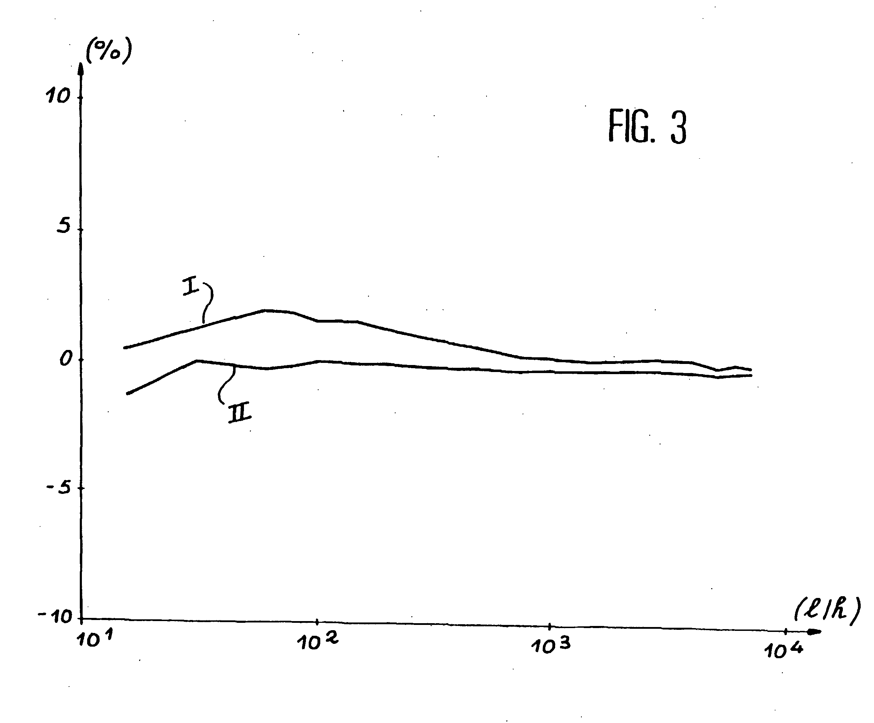

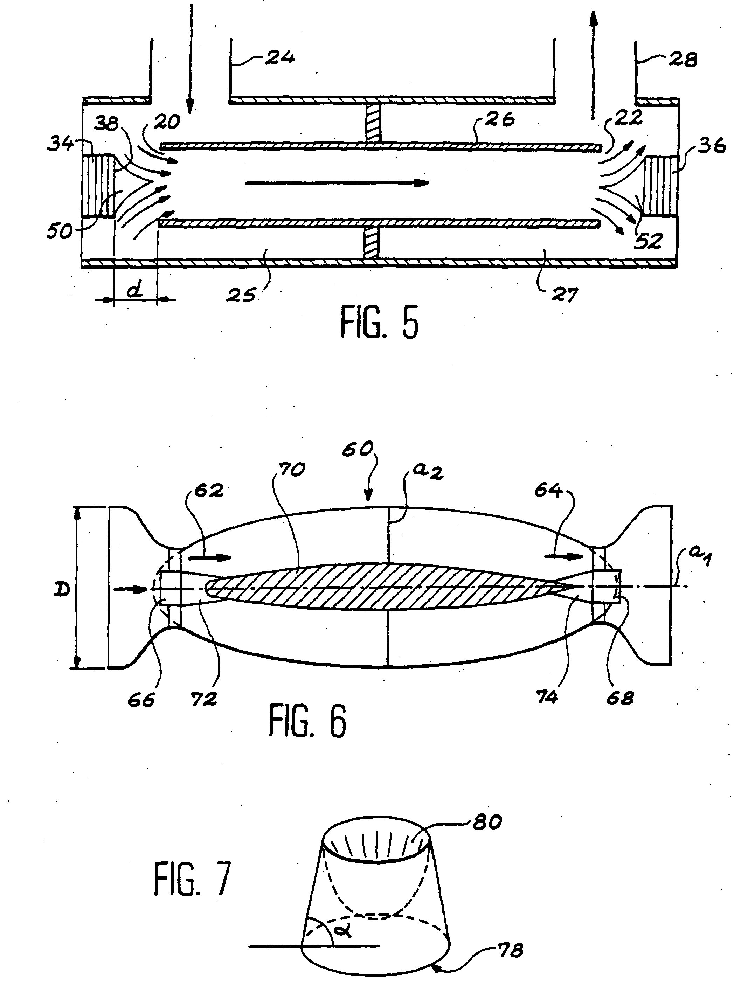

Les éléments décrits, placés contre les transducteurs, empêchent toute création de tourbillons et permettent d'avoir, quel que soit le régime d'écoulement dans une gamme de débits donnée, sensiblement la même distribution du champ des vitesses, ou le même profil de vitesses, dans l'espace entre l'ouverture d'entrée 20 du cylindre 26 et le transducteur 34, ainsi que dans l'espace entre l'ouverture de sortie 22 du cylindre 26 et le transducteur 36. Ceci a pour conséquence que les non-linéarités de la courbe d'étalonnage disparaissent en grande partie ou totalement par rapport à une configuration classique. Un tel résultat est illustré par le graphique de la figure 3, sur lequel sont portés en abscisse les débits d'un fluide (dans ce cas : de l'azote), et en ordonnée l'écart, en pour-cent, des mesures effectuées par rapport à un comportement linéaire. La courbe I représente cet écart pour un dispositif de mesure selon l'art antérieur, ne comportant pas d'élément de guidage du fluide en combinaison avec les transducteurs ; la courbe II correspond à un dispositif selon la présente invention, dans un mode de réalisation qui sera décrit plus loin en liaison avec la figure 6. Il apparaît clairement que, quel que soit le régime (faible débit ou débit élevé) d'écoulement du fluide, dans la gamme $10^1$-$10^4$ l/h, et en particulier $10^2$-$10^3$ l/h, l'écart de la mesure par rapport à un comportement linéaire est beaucoup plus faible (moins de 1% sur la gamme 15 l/h-$10^4$ l/h et moins de 0,5% entre 20 l/h et $10^4$ l/h) dans le cas du dispositif selon la présente invention que dans le cas du dispositif selon l'art antérieur.

En outre, un tel dispositif n'induit pas de pertes de charge supplémentaires.

Une méthode de test permettant de déterminer si l'élément choisi a une forme satisfaisante, permettant de canaliser le fluide avec un profil de vitesses sensiblement identique pour tout débit ou régime d'écoulement dans une gamme donnée consiste donc à mesurer l'écart par rapport à un comportement linéaire, de la mesure obtenue avec un dispositif équipé de l'élément en question.

Une autre méthode consiste à calculer ou simuler le profil de vitesses obtenu dans chaque partie du dispositif équipé d'un tel élément, et ceci sur une gamme de débits donnée. Le code de calcul utilisé pour réaliser ces simulations d'écoulement à travers un tube de section circulaire résout les équations fondamentales de la dynamique des fluides, dites de Navier-Stokes. Un calcul a été réalisé à partir d'un maillage axisymétrique, l'écoulement étant considéré comme incompressible et stationnaire.

Les débits, du minimum jusqu'à 700 l/h, ont été simulés en régime laminaire ; au delà, un modèle de turbulence de type k-ε a été introduit afin de simuler les régimes turbulents.

L'amélioration apportée par le dispositif pour cette configuration de tube est sensible, du débit maximum jusqu'à 7 l/h, la limite basse de la dynamique métrologique se situant à 15 l/h.

Des exemples de répartition du champ de vitesses axiales :

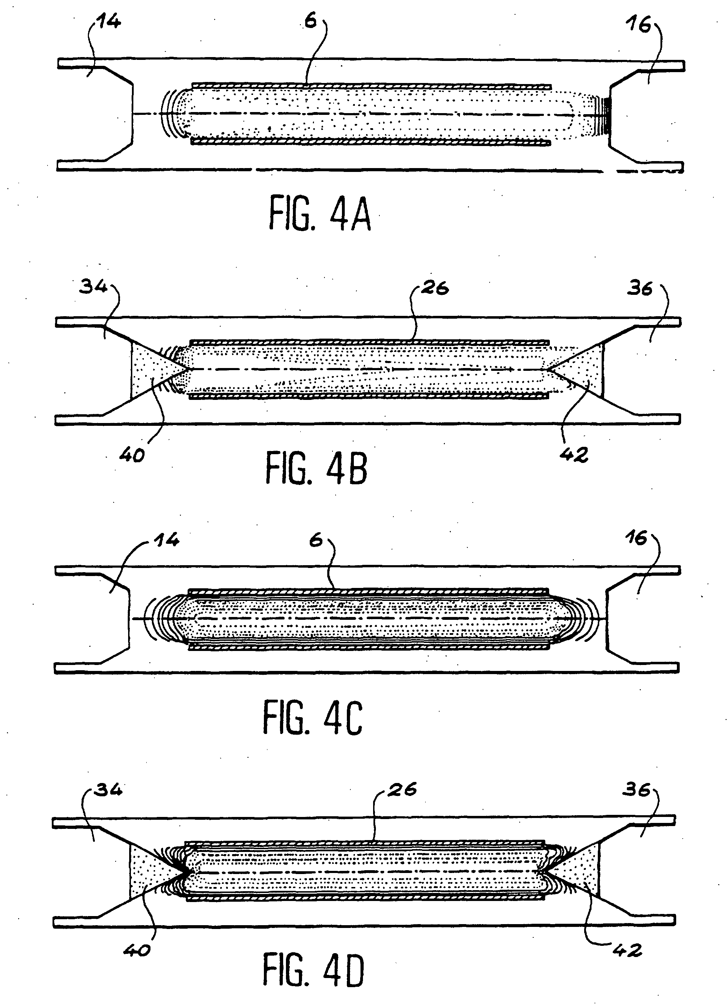

- à l'intérieur d'un dispositif selon la figure 2, sont donnés sur les figures 4B et 4D (figure 4B : débit de 5987, 1 l/h; figure 4D : débit de 5,987 l/h). Sur ces figures, les références 34, 36, 40, 42 et 26 ont la même signification que sur la figure 2,
- à l'intérieur d'un dispositif selon la figure 1, sont donnés sur les figures 4A et 4C (figure 4A: débit de 5987,1 l/h ; figure 4C : débit de 5,987 l/h), où les références 6, 14, 16 ont la même signification que sur la figure 1.

Il apparaît clairement, sur ces figures, une différence importante entre la répartition du champ des vitesses axiales dans le cas d'un dispositif selon l'art antérieur et la répartition du champ des vitesses axiales dans le cas d'un dispositif selon la présente invention.

Par ailleurs, dans le cas d'un régime irrégulier de circulation du fluide, le dispositif selon l'invention permet de réduire fortement les fluctuations des mesures de vitesse, autour d'une valeur moyenne. Le nombre de données qu'il est nécessaire d'accumuler pour obtenir une valeur fiable du débit s'en trouve donc diminué.

Le dispositif conforme à l'invention permet, comme on l'a vu ci-dessus, d'obtenir une réponse dont la linéarité est améliorée par rapport aux dispositifs de l'art antérieur, pour toute variation de débit dans une large gamme. Par ailleurs, en modifiant les dimensions de l'élément de canalisation du fluide, qui est fixé sur un des transducteurs, il est possible de faire varier la distance entre la surface de ce transducteur et l'orifice correspondant du cylindre 26. De cette manière, il est possible de diminuer la perte de charge liée à la présence du transducteur dans l'écoulement du fluide. Ainsi, si l'on reprend l'exemple de la figure 2, le transducteur 36 peut être éloigné de la sortie 22 de la conduite 26, à condition d'augmenter la hauteur de l'élément 42, qui, dans cet exemple, est en forme de cône. La fonction de guidage du fluide par cet élément 42 est toujours assurée, ce qui garantit la linéarité de la réponse du dispositif à des variations de débit dans une très large gamme.

La forme des éléments de guidage du fluide n'est pas limitée à celle d'un cône. En fait, toute forme convient, qui permet d'offrir au fluide une section perpendiculaire à son écoulement, qui varie de manière continue dans le sens de l'écoulement. Ainsi qu'illustré sur la figure 5, il est possible de tailler des éléments de guidage 50, 52 de manière à ce qu'ils présentent un profil hyperbolique. Les autres éléments de la figure 5 sont identiques à ceux de la figure 2 et portent donc les mêmes références numériques.

Il est possible d'effectuer avec un dispositif conforme à la présente invention des mesures de temps de propagation et/ou des mesures de phase. Des mesures combinées de temps de propagation et de phase sont préférentiellement mises en oeuvre. Si l'on appelle S la section du tube 26, L la distance entre les transducteurs 34, 36, f la fréquence des ondes acoustiques, $t_1$ le temps de propagation des ondes du transducteur 34 vers le transducteur 36 (sens d'écoulement du fluide) et $t_2$ le temps de propagation des ondes du transducteur 36 vers le transducteur 34 (sens contraire au sens d'écoulement du fluide), $\Delta\phi$ la variation de phase entre l'onde émise et l'onde reçue, alors, le débit $Q_V$ du fluide est donné par la relation :

$$Q_v = \frac{SL\Delta\phi}{4\pi ft_1t_2}$$

Un dispositif pour mettre en oeuvre ce type de mesure est décrit dans le document EP-426 309 dans lequel les mesures de temps de propagation $t_1$, $t_2$ sont combinées à une mesure de variation de phase $\Delta\phi$ qui fournit la précision recherchée pour le débit.

L'invention peut par ailleurs être tout à fait applicable au dispositif décrit dans le document FR-A-2 683 046. Dans ce document, il est décrit une chambre de mesure en forme d'ellipsoïde de révolution, les ondes ultrasonores émises par les transducteurs-émetteurs et/ou récepteurs placés au foyer de l'ellipsoïde étant réfléchies par les parois de ce dernier et atteignant toutes le foyer opposé avec une distance parcourue identique, donc sans déphasage susceptible de diminuer l'intensité détectée. Ce dispositif fonctionne sur le principe de la mesure de temps de vol.

Conformément à la présente invention, il est donc possible de considérer, comme illustré sur la figure 6, un dispositif comportant une chambre de mesure 60 de forme ellipsoïdale ayant un grand axe $a_1$ et un petit axe $a_2$, ce dernier étant avantageusement égal à D, diamètre de la conduite d'arrivée. L'entrée 62 et la sortie 64 de la chambre de mesure 60 sont alignées sur le grand axe $a_1$. La chambre de mesure 60 possède une paroi interne réfléchissant les ultrasons. Deux transducteurs, émetteurs-récepteurs d'ultrasons 66, 68 sont placés aux foyers $F_1$ et $F_2$ de l'ellipsoïde. La chambre de mesure peut en outre comprendre un obstacle 70 disposé longitudinalement selon le grand axe $a_1$ de l'ellipsoïde, de manière à rendre la distribution transversale de vitesses du fluide sensiblement constante dans la chambre de mesure, quel que soit le débit à l'intérieur de la chambre dans une gamme de débits donnée. Cet obstacle possède une forme aérodynamique à symétrie cylindrique autour du grand axe $a_1$ de l'ellipsoïde. Notamment, il peut présenter une forme d'ogive ayant une section longitudinale ellipsoïdale telle que l'écartement entre la paroi de la chambre de mesure 60 et la majeure partie de la surface de l'obstacle 70 soit constant. L'ogive peut présenter une extrémité effilée du côté de l'ouverture de sortie 64. Selon un autre mode de réalisation, l'obstacle peut être complètement ellipsoïdal, c'est-à-dire symétrique par rapport à son petit axe. Les moyens pour maintenir l'obstacle 70, ainsi que les transducteurs 66, 68 en position dans la chambre 60 sont décrits plus précisément dans le document FR-A-2 683 046. Conformément à la présente invention, il est possible de fixer sur au moins un transducteur 66, 68 un élément 72, 74 en un matériau transparent aux ondes acoustiques, et ayant une forme permettant de canaliser le fluide avec un même profil de vitesses pour tous les régimes d'écoulement, dans une gamme de débits donnée. Ainsi, il est possible d'éviter toute turbulence à proximité de la surface du transducteur 66 ou du transducteur 68 lors de variations de régime d'écoulement du fluide. Si il y a un obstacle 70, du côté de cet obstacle, chaque élément 72, 74 est taillé de façon à venir s'y appuyer. Un tel élément 72 est par exemple représenté plus précisément sur la figure 7. Il a une forme tronconique, la base 78 du tronc de cône venant s'appuyer contre le transducteur 66, la section 80 et l'intérieur du tronc de cône, du côté de cette section, étant taillée de façon à venir s'appuyer sur l'obstacle 70. La pente du cône dépend de la distance entre le transducteur 66 et la zone de l'obstacle 70 sur laquelle la section 80 vient s'appuyer. En fait, on choisira cette pente (angle $\alpha$ sur la figure 7) de façon à ce que la réponse du système à des variations de débit (sur un intervalle défini par l'opérateur) présente un écart inférieur à une valeur donnée par rapport au régime linéaire.

Un dispositif électronique permettant la détermination du débit ou de la vitesse d'écoulement du fluide est décrit, pour ce mode de réalisation, dans le document FR-A-2 683 046. Ce dispositif se rapporte à un montage de principe pour la mesure du temps de vol. Cette électronique peut être directement appliquée à un dispositif de mesure de débit conforme à la présente invention, selon ce second mode de réalisation.

**Revendications**

1. Dispositif de mesure de débit d'un fluide, comportant un conduit (26, 60) présentant une. ouverture d'entrée (20) et une ouverture de sortie (22) pour la circulation du fluide, au moins deux transducteurs d'émission et de réception de signaux <u>ultrasonores</u> (34, 36, 66, 68) <u>ayant deux faces en regard,</u> chaque transducteur étant associé à une des ouvertures du conduit, **caractérisé en ce qu'**au moins un élément <u>de guidage du fluide</u> (40, 42, 50, 52) en un matériau transparent aux ondes acoustiques est disposé <u>sur la face de</u> l'un des transducteurs <u>en regard de l'autre transducteur</u> , ledit élément ayant une forme permettant de canaliser l'écoulement du fluide <u>lors de son entrée dans ledit conduit.</u>

2. Dispositif selon la revendication 1, le matériau transparent aux ondes acoustiques étant un agglomérat de fibres synthétiques ou métalliques ayant un diamètre de l'ordre du dixième de millimètre.

3. Dispositif selon la revendication 1 ou 2, la forme d'au moins un des éléments (40, 42, 50, 52) en un matériau transparent aux ondes acoustiques étant telle que, lors du passage d'un fluide, ce dernier traverse une section perpendiculaire à son écoulement et qui varie de manière continue dans le sens de cet écoulement.

4. Dispositif selon l'une des revendications 1 à 3, le conduit (26, 60) ayant une symétrie de révolution autour d'un axe, au moins un des éléments (40, 42, 50, 52) en matériau transparent aux ondes acoustiques ayant également une symétrie de révolution autour de cet axe.

5. Dispositif selon l'une des revendications 1 à 4, le conduit (26) ayant une symétrie cylindrique autour d'un axe, au moins un des éléments (40, 42, 50, 52) en matériau transparent aux ondes acoustiques ayant une symétrie de révolution autour de cet axe.

6. Dispositif selon l'une des revendications 1 à 5, chaque transducteur (34, 36) étant disposé en regard d'une des ouvertures (20, 22) du conduit (26), à distance de cette ouverture, chaque élément en matériau transparent aux ondes acoustiques étant fixé sur une face (38) d'un transducteur tournée vers l'ouverture correspondante du conduit.

7. Dispositif selon la revendication 6, au moins un des éléments (40, 42) en un matériau transparent aux ondes acoustiques ayant une forme conique.

8. Dispositif selon la revendication 6, au moins un des éléments (50, 52) en un matériau transparent aux ondes acoustiques ayant un profil hyperbolique.

9. Dispositif selon l'une des revendications 6 à 8, la distance (d) entre chaque transducteur et l'ouverture en regard de laquelle il est situé étant telle que la perte de charge du fluide lors de son passage dans le dispositif est inférieure à une valeur donnée.

10. Dispositif selon l'une des revendications 1 à 4, le conduit (60) ayant une forme approximativement ellipsoïdale et une surface intérieure réfléchissant les ondes acoustiques, chaque transducteur (66, 68) étant positionné à un foyer de l'ellipsoïde, et chaque élément (72, 74) transparent aux ondes acoustiques s'appuyant sur un transducteur.

11. Dispositif selon la revendication 10, comportant en outre un obstacle (70) de forme aérodynamique, à symétrie axiale par rapport au grand axe de l'ellipsoïde, disposé dans le conduit, chaque élément (72, 74) transparent aux ondes acoustiques s'appuyant d'un côté sur un transducteur (66, 68) et de l'autre côté sur l'obstacle (70).

12. Dispositif selon la revendication 10 ou 11, au moins un élément (72, 74) en un matériau transparent aux ondes acoustiques ayant un profil extérieur tronconique.

**Patentansprüche**

1. Vorrichtung zum Messen des Fluiddurchsatzes, die eine Leitung (26, 60), die eine Eingangsöffnung (20) und eine Ausgangsöffnung (22) für die Fluidzirkulation aufweist, und wenigstens zwei Sende- und Empfangs-Meßwandler (34, 36, 66, 68) für Ultraschallsignale, die zwei einander zugewandte Flächen besitzen und wovon jeder einer der Öffnungen der Leitung zugeordnet ist, umfaßt, **dadurch gekennzeichnet, daß** wenigstens ein Fluidführungselement (40, 42, 50, 52) aus einem für Schallwellen durchlässigen Werkstoff an der Oberfläche eines der Meßwandler gegenüber dem anderen Meßwandler angeordnet ist, wobei das Element eine Form hat, die ermöglicht, die Fluidströmung bei ihrem Eintritt in die Leitung zu kanalisieren.

2. Vorrichtung nach Anspruch 1, bei der der für Schallwellen durchlässige Werkstoff ein Gemisch aus Kunstfasern oder Metallfasern mit einem Durchmesser in der Größenordnung eines Zehntelmillimeter ist.

3. Vorrichtung nach Anspruch 1 oder 2, bei der die Form wenigstens eines der Elemente (40, 42, 50, 52) aus einem für Schallwellen durchlässigen Werkstoff derart ist, daß beim Durchgang des Fluids dieses letztere durch einen zu seiner Strömung senkrechten Querschnitt verläuft, der sich in Richtung dieser Strömung kontinuierlich ändert.

4. Vorrichtung nach einem der Ansprüche 1 bis 3, bei der dann, wenn die Leitung (26, 60) um eine Achse rotationssymmetrisch ist, wenigstens eines der Elemente (40, 42, 50, 52) aus einem für Schallwellen durchlässigen Werkstoff ebenfalls um diese Achse rotationssymmetrisch ist.

5. Vorrichtung nach einem der Ansprüche 1 bis 4, wobei dann, wenn die Leitung (26) um eine Achse rotationssymmetrisch ist, wenigstens eines der Elemente (40, 42, 50, 52) aus einem für Schallwellen durchlässigen Werkstoff um diese Achse rotationssymmetrisch ist.

6. Vorrichtung nach einem der Ansprüche 1 bis 5, bei der dann, wenn jeder Meßwandler (34, 36) gegenüber einer der Öffnungen (20, 22) der Leitung (26) in einem Abstand von dieser Öffnung angeordnet ist, jedes Element aus einem für Schallwellen durchlässigen Werkstoff an einer Fläche (38) eines Meßwandlers, die zu der entsprechenden Öffnung der Leitung orientiert ist, befestigt ist.

7. Vorrichtung nach Anspruch 6, bei der wenigstens eines der Elemente (40, 42) aus einem für Schallwellen durchlässigen Werkstoff eine konische Form hat.

8. Vorrichtung nach Anspruch 6, bei der wenigstens eines der Elemente (50, 52) aus einem für Schallwellen durchlässigen Werkstoffs ein hyperbolisches Profil hat.

9. Vorrichtung nach einem der Ansprüche 6 bis 8, bei der der Abstand (d) zwischen jedem Meßwandler und der Öffnung, gegenüber der er sich befindet, derart ist, daß der Druckverlust des Fluids bei seinem Durchgang durch die Vorrichtung kleiner als ein gegebener Wert ist.

10. Vorrichtung nach einem der Ansprüche 1 bis 4, bei der dann, wenn die Leitung (60) angenähert ellipsoidförmig ist und eine innere Oberfläche die Schallwellen reflektiert, jeder Meßwandler (66, 68) in einem Brennpunkt des Ellipsoids positioniert ist und jedes Element (72, 74), das für Schallwellen durchlässig ist, sich an einem Meßwandler abstützt.

11. Vorrichtung nach Anspruch 10, die außerdem ein Hindernis (70) mit aerodynamischer Form und Axialsymmetrie in bezug auf die große Achse des Ellipsoids besitzt und in der Leitung angeordnet ist, wobei sich jedes für Schallwellen durchlässige Element (72, 74) mit einer Seite am Meßwandler (66, 68) und mit der anderen Seite am Hindernis (70) abstützt.

12. Vorrichtung nach Anspruch 10 oder 11, die wenigstens ein Element (72, 74) aus einen für Schallwellen durchlässigen Werkstoff besitzt, das ein kegelstumpfförmiges Außenprofil aufweist.

## Claims

1. A device for measuring a fluid flow rate, the device comprising a duct (26, 60) having an inlet opening (20) and an outlet opening (22) for fluid flow, and at least two transducers for transmitting and receiving ultrasound signals (34, 36, 66, 68), having two faces facing each other each transducer being associated with one of the openings of the duct, the device being **characterized in that** at least one fluid flow guiding element (40, 42, 50, 52) of material that is transparent to soundwaves is disposed on the face of the transducers facing the other transducer, said element being of a shape that enables the flow of the fluid to be channeled as it enters in the duct.

2. A device according to claim 1, in which the material that is transparent to soundwaves is an agglomeration of synthetic or metal fibers each having a diameter of about one-tenth of a millimeter.

3. A device according to claim 1 or 2, in which the shape of at least one of the elements (40, 42, 50, 52) of material that is transparent to soundwaves is such that, as the fluid flows past, the fluid passes through a section perpendicular to its flow that varies substantially continuously in said flow direction.

4. A device according to any one of claims 1 to 3, in which the duct (26, 60) is circularly symmetrical about an axis, at least one of the elements (40, 42, 50, 52) of material that is transparent to soundwaves being likewise circularly symmetrical about said axis.

5. A device according to any one of claims 1 to 4, in which the duct (26) is circularly cylindrical about an axis, at least one of the elements (40, 42, 50, 52) of material transparent to soundwaves being circularly symmetrical about said axis.

6. A device according to any one of claims 1 to 5, in which each transducers (34, 36) is disposed facing one of the openings (20, 22) of the duct (26) and at a distance from said opening, said element of material that is transparent to soundwaves being fixed on a face (38) of a transducer that faces towards the corresponding opening of the duct.

7. A device according to claim 6, in which at least one of the elements (40, 42) of material transparent to soundwaves is conical in shape.

8. A device according to claim 6, in which at least one of the elements (50, 52) of material transparent to soundwaves is hyperbolic in profile.

9.  A device according to any one of claims 6 to 8, in which the distance (d) between each transducer and the opening which it faces is such that the headloss in the fluid on passing through the device is less than a given value.

10. A device according to any one of claims 1 to 4, in which the duct (60) is approximately ellipsoidal in shape and has an inside surface that reflects soundwaves, each transducer (66, 68) being positioned at a focus of the ellipsoid, and each element (72, 74) that is transparent to soundwaves bearing against a respective transducer.

11. A device according to claim 10, further including an obstacle (70) of streamlined shape that is circularly symmetrical about the major axis of the ellipsoid and that is located within the duct, each element (72, 74) that is transparent to soundwaves bearing at one end against a transducer (66, 68) and at its opposite end against the obstacle (70).

12. A device according to claim 10 or 11, in which at least one element (72, 74) of material that is transparent to soundwaves has an outside profile that is frustoconical.

FIG. 1

FIG. 2

FIG. 3

EP 0 826 139 B1

FIG. 4A

FIG. 4B

FIG. 4C

FIG. 4D

FIG. 5

FIG. 6

FIG. 7